# EUROPÄISCHE PATENTSCHRIFT

(11) **EP 0 975 148 B1**
(45) Veröffentlichungstag und Bekanntmachung des Hinweises auf die Patenterteilung: **24.01.2007**
(21) Anmeldenummer: 98113513.0
(22) Anmeldetag: 20.07.1998
(51) Int. Cl.: H04N 1/40

(54) **Verfahren zum Eingravieren von Bildern mittels Strahlung in eine strahlungsempfindliche Schicht, insbesondere zum Lasergravieren**
Method for engraving images with radiation on a radiation sensitive layer, especially for laser engraving
Procédé de gravure d'images avec radiation dans une couche sensible aux rayons, spécialement pour la gravure au laser

(43) Veröffentlichungstag der Anmeldung: 26.01.2000
(73) Patentinhaber: MAURER ELECTRONICS GMBH, 80992 München (DE)
(72) Erfinder: Maurer, Thomas, 80639 München (DE); Renz, Walter, Dr., 82229 Seefeld-Drössling (DE)
(74) Vertreter: TER MEER - STEINMEISTER & PARTNER GbR

(56) Entgegenhaltungen:
- EP-A- 0 203 056
- EP-A- 0 420 573
- EP-A- 0 680 198
- US-A- 4 547 784

## Beschreibung

Die Erfindung betrifft ein Verfahren zum Eingravieren von Bildern mittels Strahlung in eine strahlungsempfindliche Schicht, insbesondere zum Lasergravieren nach dem Oberbegriff des Anspruchs 1.

Das Eingravieren von Bildern, beispielsweise von Paßbildern, Unterschriften, die Fälschungssicherheit erhöhenden graphischen Mustern und dergleichen, mittels Strahlung, insbesondere mittels Laserstrahlung in eine strahlungsempfindliche Schicht wird heutzutage bei der Herstellung von Ausweiskarten und -papieren, wie beispielsweise Kreditkarten. Bankkarten, Barzahlungskarten. Personalausweisen, Führerscheinen und Pässen bereits weitgehend eingesetzt. Für die Lasergravur oder Laserbeschriftung sind die Ausweiskarten oder die zu beschriftenden Blätter von Pässen mit einer für die Lasergravur geeigneten Schicht, beispielsweise einer durch spezielle Zusatzstoffe sensibilisierten Folie oder einer für die verwendete Strahlung empfindlichen Lackschicht versehen, so daß durch Bestrahlung der strahlungsempfindlichen Schicht eine im folgenden durchgehend als Schwärzung bezeichnete optische und/oder haptische Veränderung der Schicht erzeugt werden kann.

Um ein Bild, also beispielsweise ein Portraitfoto, einen wie auch immer gearteten Schriftzug oder auch ein Relief in die Schicht einzugravieren wird die Schicht mit einem Laserstrahl punktweise abgetastet, wobei die auf jeden Bildpunkt auftreffende Strahlungsenergie oder -menge so eingestellt wird, daß eine gewünschte Schwärzung erzielt wird. Um insbesondere Portraitfotos mit hoher Qualität in eine strahlungsempfindliche Schicht einzugravieren, ist es erforderlich, daß die Strahlungsenergie für jeden Bildpunkt so genau eingestellt werden kann, daß 64, 128 oder sogar 256 Graustufen erzielt werden können.

Hierfür ist es erforderlich, daß der verwendete Laser nicht nur eine hohe Leistung, insbesondere Impulsleistung, sondern auch eine hohe zeitliche Stabilität besitzt, daß also die Laserstrahlstärke bzw. die Impulshöhe auch über lange Zeit konstant ist.

Diese hohen Anforderungen an den Laser machen jedoch eine entsprechende Beschriftungsstation relativ teuer, so daß sie nur dort rentabel ist, wo sehr große Mengen von Ausweiskarten angefertigt werden müssen.

Als druckschriftlichen Nachweis für ein Verfahren zum Eingravieren von Bildern, wie es oben erläutert wurde, wird beispielsweise auf die DE 36 34 865 A1 hingewiesen.

Die EP 0 680 198 A2 betrifft einen Drucker, insbesondere Tintenstrahldrukker mit optischer Rückkopplung. In einem ersten Durchgang wird ein Bild gedruckt, das schwächer ist, als das gewünschte zu druckende Bild. Mit einem optischen Sensor wird die erzielte Dichte des gedruckten Bildes erfaßt, um aus der Differenz der erreichten Dichte und der im nächsten Durchgang zu erzielenden Dichte einen zu druckenden Dichtewert zu ermitteln. Diese Vorgehensweise wird dann nochmals wiederholt, um in einem dritten Durchgang das gewünschte Bild zu erhalten.

Aus der EP 0 420 573 A2 ist eine Steuerung für eine Laserlichtquelle bekannt, bei der die Lichtmenge eines Laserstrahls überwacht wird, um in Abhängigkeit davon die Stärke des Laserstrahls einzustellen.

Der Erfindung liegt die Aufgabe zugrunde, ein Verfahren der eingangs genannten Art bereitzustellen, das es ermöglicht, Bilder mit hoher Qualität und Präzision in eine strahlungsempfindliche Schicht einzugravieren, ohne daß hierfür eine hochstabile Strahlungsquelle erforderlich wäre.

Diese Aufgabe wird durch das Verfahren nach Anspruch 1 gelöst. Vorteilhafte Ausgestaltungen der Erfindung sind in den Unteransprüchen beschrieben.

Erfindungsgemäß ist also ein Verfahren zum Eingravieren von Bildern mittels Strahlung in eine strahlungsempfindliche Schicht, insbesondere zum Lasergravieren, vorgesehen, bei dem die strahlungsempfindliche Schicht punktweise so bestrahlt wird, daß für jeden Bildpunkt die für diesen vorbestimmte Schwärzung erzielt wird, wobei in einem ersten Bestrahlungsdurchgang jeder Bildpunkt mit einer definierten Strahlungsenergie bestrahlt wird, so daß die in jedem Bildpunkt angestrebte Schwärzung einem vorgebbaren Bruchteil der für diesen Bildpunkt vorbestimmten Schwärzung entspricht, die in jedem Bildpunkt erzielte Schwärzung aus der für diesen Bildpunkt ausgestrahlten Strahlungsmenge ermittelt wird, und beim nachfolgenden Bestrahlen der Bildpunkte in einem letzten Bestrahlungsdurchgang jeder Bildpunkt mit einer Strahlungsenergie bestrahlt wird, die in Abhängigkeit von der bereits erzielten und der für diesen Bildpunkt vorbestimmten Schwärzung eingestellt wird.

Während also das Bild Punkt für Punkt graviert wird, wird die an den jeweiligen Bildpunkten erzielte Schwärzung mit der angestrebten Schwärzungverglichen, für die die Strahlungsenergie eingestellt war, um aus der angestrebten und der erzielten Schwärzung einen Korrekturwert zu bilden, der dann bei nachfolgenden Bestrahlungsvorgängen berücksichtigt wird. Auf diese Weise läßt sich erreichen, daß selbst dann, wenn die Strahlstärke des Lasers oder dessen Impulshöhe Schwankungen unterliegt, Bilder mit hoher Genauigkeit und Präzision in die strahlungsempfindliche Schicht eingraviert werden können.

Auf diese Weise lassen sich Schwärzungsfehler, die auf statistische Schwankungen oder zeitliches Driften der Laserleistung bzw. der Laserstrahlstärke zurückzuführen sind, so weit reduzieren, daß sie nicht mehr erkennbar sind. Selbst wenn der relative Schwärzungsfehler bei jedem Bestrahlungsdurchgang verhältnismäßig hoch ist, so läßt sich doch der relative Schwärzungsfehler für die zu erzielende Gesamtschwärzung in einem Bildpunkt sehr klein machen, insbesondere wenn beim letzten Bestrahlungsdurchgang nur noch eine geringe zusätzliche Bestrahlung verlangt wird.

Der Grundgedanke der vorliegenden Erfindung besteht also darin, die beim Gravieren oder Einschreiben von Informationen in eine Schicht mittels Strahlung, insbesondere mittels Laserstrahlung, für die einzelnen Bildpunkte erzielte Schwärzung zu erfassen und mit der angestrebten Schwärzung zu vergleichen, um bei dem nachfolgenden Bestrahlen von Bildpunkten das vorher erzielte Schwärzungsergebnis bei der Einstellung der Strahlungsenergie entsprechend der zu erzielenden Schwärzung zu berücksichtigen, so daß auch beim Einsatz von relativ einfachen Lasern die gewünschte Schwärzung und damit die gewünschte Bildqualität mit hoher Präzision erreicht werden kann. Die Doppel- oder Mehrfachbestrahlung hat darüber hinaus noch den Vorteil, daß Lasersysteme mit wesentlich geringerer Ausgangsleistung eingesetzt werden können.

Bei einer besonder vorteilhaften Ausgestaltung der Erfindung ist vorgesehen, daß bei allen Bestrahlungsdurchgängen außer dem letzten die Strahlungsenergie so eingestellt wird, daß die in dem jeweiligen Bestrahlungsdurchgang zusätzlich angestrebte Schwärzung demselben Bruchteil der Differenz zwischen der vorliegenden Schwärzung und der für den jeweiligen Bildpunkt vorbestimmten Schwärzung entspricht, und daß beim letzten Bestrahlungsdurchgang die Strahlungsenergie so eingestellt wird, daß die für den jeweiligen Bildpunkt vorbestimmte Schwärzung angestrebt wird.

Durch das iterative Verfahren läßt sich die Differenz zwischen der vorliegenden Schwärzung und der für den jeweiligen Bildpunkt vorbestimmten Schwärzung sehr schnell so klein machen, daß der beim letzten Bestrahlungsdurchgang auftretenden Schwärzungsfehler so klein wird, daß er nicht mehr erkennbar ist.

Besonders vorteilhaft ist es jedoch, wenn beim letzten Bestrahlungsdurchgang die angestrebte zusätzliche Schwärzung einer Helligkeitsdifferenz unterhalb der Erkennbarkeitsgrenze des menschlichen Auges entspricht.

Besonders vorteihaft ist es, wenn zum Bestrahlen Laserstrahlung verwendet wird, und wenn die in jeden Bildpunkt erzielte Schwärzung aus der jeweiligen Strahlungsleistung ermittelt wird. Die Erfassung der jeweils beim Bestrahlen eines Bildpunktes verwendeten Strahlungsleistung eignet sich besonders gut, um ein Maß für die erzielte Schwärzung zu erhalten, da die für eine bestimmte Schwärzung erforderliche Bestrahlung vorzugsweise ebenfalls über die Stahlungsleistung geregelt wird.

Bei einem besonders bevorzugten Ausführungsbeispiel der Erfindung ist dementsprechend vorgesehen, daß zum Erzeugen der Laserstrahlung ein im Pulsbetrieb arbeitendes Lasersystem verwendet und die in jedem Bildpunkt erzielte Schwärzung aus der Impulshöhe des für den jeweiligen Bildpunkt ausgestrahlten Laserimpulses ermittelt wird.

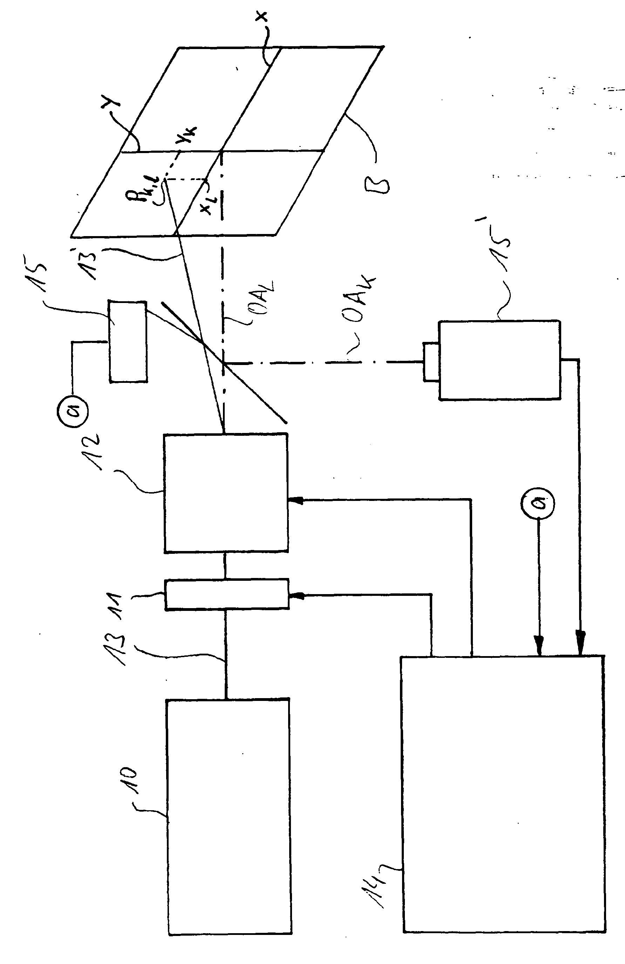

Ausführungsbeispiele der Erfindung werden im folgenden unter Bezugnahme auf die Zeichnung näher erläutert. Die einzige Figur der Zeichnung zeigt ein schematisches Blockdiagramm einer Lasergravieranlage zur Durchführung des erfindungsgemäßen Verfahrens.

Wie in der Zeichnung dargestellt, weist die Lasergravier- oder -beschriftungsanlage ein Lasersystem 10, eine Verschlußeinrichtung 11 und eine Strahlablenkeinrichtung 12 auf. Ein vom Lasersystem 10 erzeugter Laserstrahl 13 gelangt durch die Verschlußeinrichtung 11, die beispielsweise eine akusto-optische Schaltblende sein kann, zur Strahlablenkeinrichtung 12, die den Laserstrahl 13 in x- und y-Richtung so ablenkt, daß ein Schreibstrahl 13' eine Bildebene B punktweise abtastet.

Eine Steuervorrichtung 14 steuert die Verschlußeinrichtung 11 und die Strahlablenkeinrichtung 12 in der Weise, daß die auf jeden Bildpunkt P_{k, 1} einer strahlungsempfindlichen Schicht auftreffende Strahlungsenergie so groß ist, daß in dem Bildpunkt eine bestimmte Schwärzung erreicht wird.

Anstelle einer vom Lasersystem 10 getrennten Verschlußeinrichtung 11 kann auch das Laserstrahl-Austrittsfenster des Lasersystems 10 zur Einstellung der Strahlleistung verwendet werden. Wird beispielsweise ein kontinuierlich gepumpter Laser, insbesondere ein Neodym-YAG-Laser verwendet, um für die Bestrahlung der strahlungsempfindlichen Schicht entsprechende Laserimpulse zu erzeugen, so läßt sich der Durchlaßgrad des Austrittfensters für jeden einzelnen Bestrahlungsvorgang individuell variieren, um die Impulshöhe jedes Laserimpulses einzustellen. Der Durchlaßgrad des Austrittsfensters läßt sich dabei für jeden Impuls so genau einstellen, daß bis zu 256 Graustufen oder mehr erzeugt werden können.

Um die mit einem jeweiligen Bestrahlungsvorgang erzielte Schwärzung zu ermitteln, ist ein Impulshöhenfühler 15 vorgesehen, der über einen schwachen Teilerspiegel 16 einen kleinen Teil der Impulsenergie empfängt und der ein der Impulshöhe jedes Laserimpulses entsprechendes Ausgangssignal an die Steuervorrichtung 14 liefert. Die erfaßte Impulshöhe steht je nach dem verwendeten photoempfindlichen Material und dem benutzten Lasersystem in einem festen Zusammenhang mit der erreichten Schwärzung. Dieser Zusammenhang läßt sich durch einen geeigneten Kalibrierungslauf ermitteln und wird für die Steuerung der einzelnen Bestrahlungsvorgänge benötigt.

Eine andere Möglichkeit, die mit der jeweiligen Bestrahlung erreichte Schwärzung zu ermitteln, besteht z.B. darin, mit einer Videokamera 15' die Bildebene B über einen Teilerspiegel 16 zu beobachten. Obwohl in der Zeichnung sowohl der Impulshöhenfühler 15 als auch die Videokamera 15' dargestellt sind, wird zur Ermittlung der Schwärzung üblicherweise nur eine der beiden Vorrichtungen eingesetzt.

Anstelle der dargestellten Anordnung der Videokamera 15' ist es auch denkbar, diese so anzuordnen, daß sie für eine schräge Beobachtung der Bildebene B geeignet ist, daß also die optische Achse OA_{K} der Videokamera 15' nicht mit der optischen Achse OA_{L} des Lasersystems 10 zusammenfällt. Bei einer derartigen schrägen Beobachtungsanordnung kann dann der Teilerspiegel 16 entfallen. Allerdings muß dann eine möglicherweise auftretende Verzerrung der Bildebene im Videobild bei der Auswertung der Bildsignale berücksichtigt werden.

Ferner erscheint es auch möglich, anstelle einer Videokamera 15 mit einer zweidimensionalen Photoempfängeranordnung eine lineare Photoempfängeranordnung, beispielsweise eine Photodiodenzeile, oder sogar nur einen einzelnen schnellen Photoempfänger vorzusehen, wobei dann eine entsprechende ein- bzw. zweidimensionale Strahlablenkeinrichtung eingesetzt werden muß, um jeden Bildpunkt P_{k, l} der Bildebene B abtasten zu können.

Um ein Bild, also beispielsweise ein Portraitfoto eines Ausweisinhabers, eine Unterschrift, weitere Schriftzüge, graphische Muster oder dergleichen in die zum Lasergravieren geeignete strahlungsempfindliche Schicht einzugravieren, wird die Verschlußeinrichtung 11 so gesteuert, daß die für jeden Bildpunkt durchgelassene Strahlungsenergie in dem Bildpunkt eine bestimmte Bestrahlung bewirkt, die die gewünschte Schwärzung zur Folge hat. Hierzu wird mit Hilfe der Verschlußeinrichtung 11 oder mit dem gesteuerten Austrittsfenster des Lasersystems 10 die Impulshöhe eines durchgelassenen Laserimpulses, also dessen Leistung, beeinflußt. Treten Schwankungen in der Strahlungsleistung bzw. der Strahlstärke des Laserstrahls auf, so hat dies zur Folge, daß die in einem Bildpunkt P_{k, 1} erzeugte Bestrahlung nicht die angestrebte Schwärzung bewirkt.

Um hier Abhilfe zu schaffen, wird nach einer ersten Ausgestaltung der Erfindung nach dem Bestrahlen eines Bildpunktes P_{k, l} die dort tatsächlich erzielte Schwärzung entweder direkt oder vorzugsweise aus der gemessenen Strahlleistung oder Impulshöhe ermittelt und mit der für diesen Bildpunkt P_{k, l} vorbestimmten Schwärzung verglichen. Soll in einem Bildpunkt beispielsweise eine Schwärzung entsprechend einer Graustufe 100 aus 256 Graustufen erzielt werden, so wird die Verschlußeinrichtung 11 entsprechend angesteuert. Entspricht die erzielte Schwärzung jedoch in Folge von statistischen Schwankungen der Strahlstärke des Laserstrahls 13 nur der Graustufe 90, ist also die erzielte Schwärzung um 10 Graustufen geringer als die angestrebte Schwärzung, so wird dies beim nachfolgenden Bestrahlen von Bildpunkten P_{k, l} berücksichtigt.

Um die beim Bestrahlen ermittelte Information über die jeweils erreichte Schwärzung in den einzelnen Bildpunkten P_{k, 1} sinnvoll zu nutzen, kann bei einem ersten Bestrahlungsdurchgang die angestrebte Schwärzung entsprechend den statistischen Schwankungen der Ausgangsleistung des Lasersystems gegenüber der vorbestimmten Gesamtschwärzung für diesen Bildpunkt P_{k, l} verringert werden. Beträgt beispielsweise die Schwankungsbreite des Lasersystems 10%, so wird im ersten Bestrahlungsdurchgang für jeden Bildpunkt P_{k, l} nur 90% der endgültigen Schwärzung angestrebt und die erzielte Schwärzung erfaßt. In jedem Bildpunkt liegt dann die erreichte Schwärzung je nach der jeweiligen tatsächlich erreichten Strahlleistung oder Impulshöhe zwischen 81 und 99% der im fertigen Bild gewünschten Schwärzung. In einem zweiten Bestrahlungsdurchgang kann dann die gewünschte Schwärzung für jeden Bildpunkt mit hoher Genauigkeit erreicht werden, indem entsprechend der noch erforderlichen zusätzlichen Schwärzung bestrahlt wird. Da beim ersten Bestrahlungsdurchgang die maximale Abweichung der erzielten Schwärzung von der endgültigen Schwärzung bei einem statistischen Fehler von 10% etwa 20% beträgt, so läßt sich der Gesamtfehler im fertigen Bild auf 2% reduzieren.

Nach einer anderen Ausgestaltung der Erfindung wird zunächst ein zu gravierendes Bild Bildpunkt für Bildpunkt erzeugt, wobei jedoch für jeden Bildpunkt nur ein Bruchteil der für diesen Bildpunkt bestimmten Schwärzung angestrebt wird. Soll also ein Bildpunkt P_{k, l} im fertigen Bild beispielsweise eine Schwärzung entsprechend der Graustufe 100 besitzen, so wird der Laserstrahl 13 durch die Verschlußeinrichtung 11 so beeinflußt, daß er beispielsweise nur 50%, 60%, oder 70% der im fertigen Bild gewünschten Schwärzung bewirkt. Wird nun angenommen, daß im ersten Bestrahlungsdurchgang 60% der Gesamtschwärzung erreicht werden sollen, so wird für eine im endgültigen Bild angestrebte Graustufe 100 im ersten Bestrahlungsdurchgang die Graustufe 60 angestrebt. Im zweiten Bestrahlungsdurchgang kann dann eine zusätzliche Schwärzung angestrebt werden, die wiederum 60% der Differenz der vorliegenden Schwärzung und der im fertigen Bild angestrebten Schwärzung beträgt. Dies entspricht im dargestellten Zahlenbeispiel einer zusätzlichen Schwärzung entsprechend Graustufe 24 und einer insgesamt nach dem zweiten Bestrahlungsdurchgang vorliegenden Schwärzung von Graustufe 84. Im dritten Bestrahlungsdurchgang wird dann eine zusätzliche Schwärzung gemäß Graustufe 10 und eine Gesamtschwärzung entsprechend Graustufe 94 angestrebt. Im vierten und letzten Bestrahlungsdurchgang braucht dann nur noch eine zusätzliche Schwärzung gemäß Graustufe 6 bewirkt werden.

Wird nun nach dem ersten Bestrahlungsdurchgang festgestellt, daß im Bildpunkt P_{k,l} anstelle der angestrebten Schwärzung 60 nur die Schwärzung 55 erreicht wurde, so kann im zweiten Bestrahlungsdurchgang die Graustufe 84 angestrebt werden. Andererseits ist es auch möglich; eine Bestrahlung entsprechend 60% der Differenz zwischen der erreichten Schwärzung, also Graustufe 55, und der im fertigen Bild angestrebten Graustufe, also Graustufe 100, anzustreben. Dies entspricht einer zusätzlichen Schwärzung entsprechend Graustufe 27 und einer nach dem zweiten Bestrahlungsdurchgang vorliegenden Gesamtschwärzung entsprechend Graustufe 82.

Durch dieses iterative Bestrahlungsverfahren läßt es sich erreichen, daß im letzten Bestrahlungsdurchgang beispielsweise nur 10% oder weniger der Gesamtschwärzung erreicht werden müssen. Läßt sich die Schwärzung jeweils nur mit einem relativen Fehler von beispielsweise 10% erzielen, und tritt der maximal Fehler von 10% beim letzten Bestrahlungsdurchgang auf, so ist der relative Schwärzungsfehler bezogen auf die Gesamtschwärzung nur 1%.

Das erfindungsgemäße Verfahren ermöglicht es somit für das Lasergravieren von Bildern ein Lasersystem einzusetzen, dessen Strahlstärke relative großen Schwankungen unterworfen ist, da durch das iterative Bestrahlen der strahlungsempfindlichen Schicht in mehreren Bestrahlungsdurchgängen und das Ermitteln der jeweils erzielten Schwärzung in nachfolgenden Bestrahlungsdurchgängen die angestrebten Schwärzungswerte entsprechend korrigiert werden können, wodurch sich der relative Schwärzungsfehler bezogen auf die Gesamtschwärzung drastisch verringern läßt.

Eine andere Möglichkeit die Schwärzung im Bild in mehreren Bestrahlungsdurchgängen zu erzielen besteht darin, daß beispielsweise im ersten Bestrahlungsdurchgang 60% der Gesamtschwärzung im fertigen Bild angestrebt werden, während im zweiten Bestrahlungsdurchgang 90% der Gesamtschwärzung und im letzten Bestrahlungsdurchgang dann nur noch 10% der Gesamtschwärzung bewirkt werden müssen.

Bei beiden Vorgehensweisen ist es jedoch besonder vorteilhaft, wenn die im letzten Bestrahlungsdurchgang angestrebte zusätzliche Schwärzung so klein ist, daß sie bereits im Bereich des Rauschens liegt.

## Patentansprüche

1. Verfahren zum Eingravieren von Bildern mittels Strahlung in eine strahlungsempfindliche Schicht, insbesondere zum Lasergravieren, bei dem die strahlungsempfindliche Schicht punktweise so bestrahlt wird, dass für jeden Bildpunkt (P_{k,1}) die für diesen vorbestimmte Schwärzung erzielt wird, **dadurch gekennzeichnet, dass**
- in einem ersten Bestrahlungsdurchgang jeder Bildpunkt (P_{k,1}) mit einer definierten Strahlungsenergie bestrahlt wird, so dass die in jedem Bildpunkt (P_{k,1}) angestrebte Schwärzung einem vorgebbaren Bruchteil der für diesen Bildpunkt vorbestimmten Schwärzung entspricht,
- die in jedem Bildpunkt (P_{k,1}) erzielte Schwärzung aus der für diesen Bildpunkt (P_{k,1}) ausgestrahlten Strahlungsmenge ermittelt wird, und
- beim nachfolgenden Bestrahlen der Bildpunkte (P_{k,1}) in einem letzten Bestrahlungsdurchgang jeder Bildpunkt (P_{k,1}) mit einer Strahlungsenergie bestrahlt wird, die in Abhängigkeit von der bereits erzielten und der für diesen Bildpunkt vorbestimmten Schwärzung eingestellt wird.

2. Verfahren nach Anspruch 1, **dadurch gekennzeichnet, daß**
- bei allen Bestrahlungsdurchgängen außer dem letzten die Strahlungsenergie so eingestellt wird, daß die in dem jeweiligen Bestrahlungsdurchgang zusätzlich angestrebte Schwärzung demselben Bruchteil der Differenz zwischen der vorliegenden Schwärzung und der für den jeweiligen Bildpunkt (P_{k, l}) vorbestimmten Schwärzung entspricht, und
- beim letzten Bestrahlungsdurchgang die Strahlungsenergie so eingestellt wird, daß die für den jeweiligen Bildpunkt (P_{k, l}) vorbestimmte Schwärzung angestrebt wird.

3. Verfahren nach Anspruch 1 oder 2, **dadurch gekennzeichnet, daß** beim letzten Bestrahlungsdurchgang die angestrebte zusätzliche Schwärzung einer Helligkeitsdifferenz unterhalb der Erkennbarkeitsgrenze des menschlichen Auges entspricht.

4. Verfahren nach Anspruch 1 bis 3, **dadurch gekennzeichnet, daß** zum Bestrahlen Laserstrahlungverwendet wird, und daß die in jeden Bildpunkt (P_{k, 1}) erzielte Schwärzung aus der jeweiligen Strahlungsleistung ermittelt wird.

5. Verfahren nach Anspruch 4, **dadurch gekennzeichnet, daß** zum Erzeugen der Laserstrahlung ein im Pulsbetrieb arbeitendes Lasersystem (10) verwendet und die in jedem Bildpunkt (P_{k, l}) erzielte Schwärzung aus der Impulshöhe des für den jeweiligen Bildpunkt (P_{k, l}) ausgestrahlten Laserimpulses ermittelt wird.

## Claims

1. Method for engraving images by means of radiation into a radiation-sensitive layer, in particular for laser engraving, in which the radiation-sensitive layer is irradiated in a point-by-point manner in such a way that the predetermined blackening for each dot (P_{k,1}) is obtained for the latter, **characterized in that**
- in a first irradiation pass each dot (P_{k,1}) is irradiated with a defined radiation energy with the result that the blackening sought in each dot (P_{k,1}) corresponds to a predeterminable fraction of the predetermined blackening for this dot,
- the blackening obtained in each dot (P_{k,1}) is determined from the amount of radiation emitted for this dot (P_{k,1}), and
- during subsequent irradiation of the dots (P_{k,1}) in a last irradiation pass, each dot (P_{k,1}) is irradiated with a radiation energy which is set in accordance with the blackening already obtained and the predetermined blackening for this dot.

2. Method according to Claim 1, **characterized in that**
- in all of the irradiation passes except for the last, the radiation energy is set in such a way that the blackening additionally sought in the respective irradiation pass corresponds to the same fraction of the difference between the present blackening and the predetermined blackening for the respective dot (P_{k,1}), and
- in the last irradiation pass, the radiation energy is set in such a way that the predetermined blackening for the respective dot (P_{k,1}) is sought.

3. Method according to Claim 1 or 2, **characterized in that** in the last irradiation pass, the additional blackening sought corresponds to a luminosity difference below the perceptibility limit of the human eye.

4. Method according to Claims 1 to 3, **characterized in that** laser radiation is used for the irradiation, and **in that** the blackening obtained in each dot (P_{k,1}) is determined from the respective radiation power.

5. Method according to Claim 4, **characterized in that** in order to generate the laser radiation, a laser system (10) operating in a pulsed mode is used and the blackening obtained in each dot (P_{k,1}) is determined from the pulse height of the laser pulse radiated for the respective dot (P_{k,1}).

## Revendications

1. Procédé de gravure d'images au moyen d'un rayonnement dans une couche sensible au rayonnement, en particulier, pour la gravure au laser, dans lequel la couche sensible au rayonnement est irradiée par points de manière que pour chaque point image (P_{k, 1}), le noircissement prédéterminé pour celui-ci soit atteint, **caractérisé en ce que**,
- lors d'un premier passage d'irradiation, chaque point image (P_{k, 1}) est irradié avec une énergie de rayonnement définie, de manière que le noircissement visé dans chaque point image (P_{k, 1}) corresponde à une fraction susceptible d'etre prédéterminée du noircissement déterminé préalablement pour ce point image,
- le noircissement atteint dans chaque point image (P_{k, 1}) est déterminé à partir de la quantité de rayonnement irradiée pour ce point image (P_{k, 1}), et
- lors de l'irradiation subséquente des points image (P_{k, 1}) dans un dernier passage d'irradiation, chaque point image (P_{k, 1}) est irradié avec une quantité de rayonnement réglée en fonction du noircissement déjà atteint, et de celui déterminé pour ce point image prédéterminé.

2. Procédé selon la revendication 1, **caractérisé en ce que**
- pour tous les passages d'irradiation, outre le dernier, l'énergie de rayonnement est réglée de manière que le noircissement visé en plus dans le passage de rayonnement respectif corresponde à la même fraction de la différence entre le noircissement présent et le noircissement prédéterminé pour le point image (P_{k, 1}) respectif, et
- lors du dernier passage d'irradiation, la quantité de rayonnement est réglée de manière que le noircissement prédéterminé pour le point image (P_{k, 1}) respectif soit recherché.

3. Procédé selon la revendication 1 ou 2, **caractérisé en ce que**, lors du dernier passage d'irradiation, le noircissement supplémentaire visé correspond à une différence de clarté inférieure à la limite de discernement de l'oeil humain.

4. Procédé selon les revendications 1 à 3, **caractérisé en ce que**, pour le rayonnement, on utilise un rayonnement laser et **en ce que** le noircissement obtenu à chaque point image (P_{k, 1}) est déterminé à partir de la puissance de rayonnement respective.

5. Procédé selon la revendication 4, **caractérisé en ce que** pour produire le rayonnement laser, on utilise un système laser (10) travaillant par impulsions et le noircissement atteint dans chaque point d'image (P_{k, 1}) est déterminé à partir de la hauteur d'impulsion de l'impulsion laser irradiée pour le point image (P_{k, 1}) respectif.
